# EUROPEAN PATENT SPECIFICATION

(11) **EP 3 379 939 B1**
(45) Date of publication and mention of the grant of the patent: **20.05.2020**
(21) Application number: 16798448.3
(22) Date of filing: 15.11.2016
(51) Int. Cl.: A23G 9/32, A23D 9/007, A23D 9/04, C11B 7/00, C11C 3/10

(54) **LOW SATURATED FAT BLEND FOR USE FOR MOISTURE BARRIER COATING IN FROZEN CONFECTION**
FETTMISCHUNG MIT NIEDRIGER SÄTTIGUNG ZUR VERWENDUNG FÜR EINE FEUCHTIGKEITSSPERRSCHICHT IN EISKONFEKT
MÉLANGE DE GRAISSES FAIBLEMENT SATURÉES DESTINÉ À ÊTRE UTILISÉ POUR UN REVÊTEMENT FORMANT UNE BARRIÈRE CONTRE L'HUMIDITÉ DANS UNE CONFISERIE CONGELÉE

(30) Priority: 27.11.2015 EP 15196790
(43) Date of publication of application: 03.10.2018
(73) Proprietor: Société des Produits Nestlé S.A., 1800 Vevey (CH)
(72) Inventor: CHANDRASEKARAN, Shantha Nalur, Bakersfield California 93311 (US); VILLACIS, Maria Fernanda, York Yorkshire YO31 1DU (GB)
(74) Representative: Elleby, Gudrun
(86) International application number: PCT/EP2016/077630
(87) International publication number: WO 2017/089165

(56) References cited:
- EP-A1- 0 023 150
- EP-A1- 1 813 155
- EP-A1- 2 099 313
- WO-A1-2014/016257
- WO-A1-2014/102634
- WO-A1-2015/132206

## Description

### Field of the invention

The present invention is defined by the claims and relates to a composition for coating a frozen confection, in particular to a low SFA coating composition. The invention also relates to a method for coating a frozen confection.

### Background

Coated frozen confections are products which are highly appreciated by consumers. Texture and nutritional profile of the coating is driver for consumer preference.

With the increasing concern for health and wellness there is an increasing need for reducing calories, sugars and saturated fats also in frozen confections.

Chocolate-like or compound coatings based on vegetable fats are commonly used for coating frozen confection. The crystallization of the fats in a coating are a key contributor to the physical properties of a coating, in particular its textural properties (brittleness, melting, waxiness) and setting time. Traditionally compound coatings for frozen confection have been manufactured with high proportions of lauric fats (e.g. coconut oil and palm kernel oil) which have a saturated fatty acid (SFA) level about 87-91%. With high amounts of lauric fats in the coatings, the SFA levels in the finished coating are typically between 30 and 60%.

Fat-based confectionery coating makes a good moisture barrier. The primary property of the fat attributed to its moisture barrier property is the solid fats in the fats creating a barrier property. The fat type, its setting and crystallization properties affect its moisture barrier property. It is known to use a fat based compound coating as moisture barrier which is made of the fat blend coconut and palm olein, cocoa, sugar and lecithin, and has ∼40% saturated fats. The problem is that saturated fats may be harmful to health and therefore there is a need to reduce the saturated fats in the coating while still keeping the moisture barrier property.

WO2015/045480 (Fuji Oil) discloses moisture barrier for frozen confectioneries. Said moisture barrier contains an oily composition made of fractioned palm oil, fatty acid composition or solid fat content are not disclosed. This coating has a high viscous coating. High viscous coatings tend to flow less evenly over the product and thus can result in less even spreading of a coating over the coating surface, resulting in reduced barrier properties.

EP1813155 (CSM) discloses a fat based coating compositions for frozen confectioneries. The coating disclosed have a low content in palmitic and oleic fatty acids. The coating is based on a coconut oil and palm olein blend and has saturated fatty acids ranging between 73-86% in the fats. It is generally know that that fats with higher levels of saturated fats set faster on the wall of cone. Reducing SFA therefore is a challenge while keep the barrier properties. WO 2014/016257 A1 (Loders Crooklaan) discloses a fat-based coating composition for coating a frozen confection and comprising 35% of a fat (palm mid-fraction), 45% sugar and 20% cocoa powder.

WO2014/102634 (Loders Croklaan) discloses a coating for baked good with a low Saturated Fatty Acid (SFA) content. The coating disclosed have a high content in oleic and linoleic fatty acid. This coating will not be suitable for barrier coating for ice cream wafers. The fat used is a combination of palm olein and liquid oil and has less than 45% saturated fatty acids in the fat. This will not be ideal coating for providing barrier property in frozen application because it is soft and will not set well on wafer cone walls. It is likely to run down, and therefore will not provide an effective barrier. EP1992232 (Kraft Food) discloses an edible barrier composition that could be used as a barrier layer to prevent moisture transfer in food products. The coating is a high SFA coating which uses cocoa with a low ash content in order to achieve an improved setting of the coating. It uses cocoa butter and milk fat and these have SFA in the range of 60-65%. The present invention aims at reducing the levels of SFA while still keeping the moisture barrier properties.

The prior art does not show how to further substantially reduce the SFA level in a barrier coatings.

There is a need to have barrier coatings for frozen confections where in the SFA is lower in the coating while still having an effective moisture barrier property.

### Object of the invention

It is thus the object of present invention to provide a reduced SFA barrier coating for frozen confectionery products, in particular for coating wafers or other baked products to be used in frozen confection e.g. baked inclusions.

A second object of the present invention is to provide a coating composition for frozen confectionery with acceptable processing characteristics.

This invention has developed coatings with fats/fat blends that have at least 30% less SFA than the current coating and still performs well on processing line and gives a good barrier property.

### Summary of the invention

The present invention provides with fats/fat blends that have at least 30% less SFA than the existing coating and still performs on processing line and gives a good barrier property.

It has been found to perform well on a production line e.g. when wafer cones where sprayed with coatings made according to the invention, were subsequently were filled with ice cream and put through heat shock tests. The results demonstrated good barrier property, as evidenced by heat-shock tests.

According to a first aspect the invention relates a barrier coating composition for coating frozen confection, comprising, expressed in weight % based on the total weight of the coating,
40-60 wt.% of a fat or fat blend, preferably 45-55 wt.%, said fat or fat blend comprising the following fatty acids composition in the triglycerides of the fat or fat blend, the % being based on total fat :
45 <= C16:0 <= 55 wt. % (palmitic acid)
4 <= C18:0 <= 10 wt. % (stearic acid)
30 <= C18:1 <= 39 wt. % (oleic acid)
3 <= C18:2 <= 7 wt. % (linoleic acid)
and said fat blend comprising a solid fat profile comprising:
75% <= N 0 <= 95%;
60% <= N 10 <= 90%;
30% <= N 20 <= 60%;
18% <= N 25 <= 35%;
0% <= N 30 <= 12%; and
0% <= N 35 <= 5%, and
said barrier coating having a Casson yield stress of 0.90 to 1.65 Pa measured at 40 °C.

In a second aspect the invention relates to a use of a fat or fat blend in barrier coating for frozen confection, said fat or fat blend comprising the following fatty acids composition in the triglycerides of the fat or fat blend, the % being based on total fat :
45 <= C16:0 <= 55 wt. % (palmitic acid)
4 <= C18:0 <= 10 wt. % (stearic acid)
30 <= C18:1 <= 39 wt. % (oleic acid)
3 <= C18:2 <= 7 wt. % (linoleic acid)
and said fat blend comprising a solid fat profile comprising:
75% <= N 0 <= 95%;
60% <= N 10 <= 90%;
30% <= N 20 <= 60%;
18% <= N 25 <= 35%;
0% <= N 30 <= 12%; and
0% <= N 35 <= 5%, and
wherein said barrier coating is formulated to have a Casson yield stress of 0.90 to 1.65 Pa measured at 40 °C.

The invention also relates to a method for producing the coating composition, a method of coating wafers, and coated wafers as described in the claims.

### Brief description of the drawings

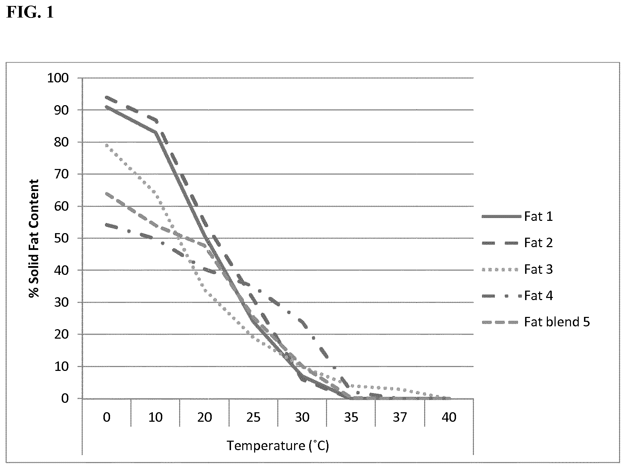

Figure 1 shows the solid fat contents of the different fats and fat blends.

### Detailed description of the invention

In the present context the barrier coating is a barrier coating used in frozen confection to prevent moisture from frozen confection mixes e.g. ice cream mix to migrate to dry products components. Such product components are e.g. baked products such as wafers, biscuits, cakes, inclusions, cones, cereals etc. In particular the barrier coating is a wafer cone coating protecting the crispiness of the wafer.

While it is possible to obtain a coating which has less than 45 wt. % of SFA, according to the invention the level of SFA in the fat or fat blend is 45-55 wt. %, preferably 46-54 wt. % of the fats blend in the coating composition. In the present context, unless otherwise stated, the fatty acids are expressed as percentages based on total fat (g fatty acid/100 g total fat). To calculate the fatty acid content based on total fatty acids the factor 0.94 should be used (1 g fatty acid/100 g total fatty acids = 0.94 g fatty acid/100 g fat).

In the present context LLL, OLL, PLL, OLO, PLO, PLP, OOO, POO, and SOO; triglycerides are abbreviated using L, O, P and S, for linoleoyl, oleoyl, palmitoyl, and stearoyl fatty acid moeity, respectively.

The barrier coating composition according to the invention comprises a fat or fat blend which further comprise the following triglyceride composition:
0-1 wt. % LLL
0-1 wt. % OLL
0-2 wt. % PLL
0-2 wt. % OOL
0-7 wt.% POL
0-15 wt.% PPL
0-4 wt. % OOO
8-17 wt. % POO+SOL
45 - 58 wt. % PPO
0-4 wt. % PPP
0-4 wt. % SOO
0-15 wt.% PSO
0-2 wt. % PPS

In a preferred embodiment of the invention the barrier coating comprises a triglyceride composition comprises 10 to 15 wt. % POO+SOL and 48 to 55 wt. %. PPO. The benefit of this coating is that it will be able to plasticize on the cone wall without further run down as it is low in polyunsaturated species.

The invention also relates to the use of a fat or fat blend according to at least claim 1 wherein the fat or fat blend further comprises the following triglyceride composition:
0-1 wt. % LLL
0-1 wt. % OLL
0-2 wt. % PLL
0-2 wt. % OOL
0-7 wt.% POL
0-15 wt.% PPL
0-4 wt. % OOO
8-17 wt. % POO+SOL, preferably 10-15 wt. % POO+SOL
45 - 58 wt. % PPO, preferably 48-55 wt. % PPO
0-4 wt. % PPP
0-4 wt. % SOO
0-15 wt. % PSO
0-2 wt. % PPS and
0-3 wt. % SSO, and wherein the coating composition comprises
18 to 60 wt.% of sugar, preferably 25-50%
0 to 25 wt. % cocoa powder, preferably 0-15% and
0 to 30 wt. % of dairy ingredients, preferably 0 to 12 wt. % dairy ingredients.

The rheological properties in the present context are measured with Physica MCR 501 rheometer -Anton Paar (Germany); fitted with the spindle CC27, @ 40°C, and following the International Confectionery Association, "Viscosity of Cocoa and Chocolate Products" Analytical Method 46 (2000). The results were expressed as Casson yield stress and Casson plastic viscosity. More precisely, the viscosity of the fats is measured using Physica MCR (rheometer model) 501-Anton Paar (Germany) system with geometry: CC27/S (Serial Number:20689) @ 40°C and 100s-1.

It has been found that with the yield stress according to the invention the coating composition will stay on a wafer cone to be coated. Below the range of yield stress the coating will run to the tip of the cone and above it will produce windows on the side of the wafer.

A preferred plastic viscosity of the coating composition has been found to be 100 to 250 mPas. Below this value the coating will not sufficiently cover the wafer, baked product etc, and thus not give the desired barrier property. Above the indicted plastics viscosity range "windows" or uneven coating or lack of coating are likely to occur on the products to be coated, which again means that the coating will not be evenly spread and not provide the needed barrier property.

The melting point of the coating has been found to be important for the coating to set well on the cone wall and however at the same time it should not be too waxy when consumed. It is preferred that the coating composition has a melting point of 29 to 34°C. Below that temperature there will be setting issues and above that temperature it will have a waxy sensorial properties.

In one embodiment of the invention the fat blend comprises interesterified fat. Interesterified fats can be plastic in nature. The improvement in plasticity after interesterification is due to formation of higher melting as well as lower melting triglycerides during interesterification. The plasticity of the fat allows the coating to remain on the wall of the cone. However it is important that the melting point of the fat does not exceed 34 °C.

In another embodiment of the invention the coating composition comprises fat or fat blend not containing hydrogenated fat. Hydrogenated fats are not preferred for use in coatings since partially hydrogenated fats contain trans fat that is harmful for health. Furthermore, it is preferred that the coating composition has less than <1% trans fatty acids.

Advantageously, the coating composition according to the invention comprising palm fraction or fractions with an iodine value of 40 to 55, preferably 42 to 52. Higher iodine value results in higher unsaturation which will lower the setting of the coating; too low an iodine value can make the coating waxy and possibly also crack.

Preferably the coating composition comprises fat or fat blends selected from the group consisting of palm, shea or fats used to make cocoa butter equivalents or cocoa butter and combinations thereof. Examples of cocoa butter equivalent are shea, Sal, mango, and Illipe. In a particular preferred embodiment of the invention the fat or fat blend in the composition consists of palm fraction or fractions.

In another preferred embodiment of the invention the fat blend comprises shea butter. Shea butter is a triglyceride (fat) containing mainly from stearic acid and oleic acid.

According to the invention the barrier coating composition comprises 40 to 60 wt.% of fat, preferably 45 to 55 wt. % of fat. This range of fat content contributes to achieve appropriate viscosity (along with an optional addition of limited amount of emulsifiers) and preferred thickness of coating in frozen confections. Alternatively, one can also use coating rheology to allow the coatings to remain linger on the wall; a higher yield stress. It has been found that a combination of the 2 characteristics, coating plasticity and rheology will enable a better barrier.

The fat-based coating composition may comprise 0.1 to 2 wt.% of emulsifiers. Preferably the emulsifiers are selected from the group consisting of sunflower lecithin, soya lecithin polyglycerol polyricinoleate (PGPR; E476), or ammonium phosphatide (YN; E442) or a combination thereof. Emulsifier can be used to further regulate the rheology of the coating. If so, preferred emulsifiers are soy lecithin and/or sunflower lecithin as they are perceived as cleaner label.

The coating composition according to the invention may comprises 40 to 60 wt. % non-fat solids. The non-fat solids are preferably selected from the group consisting of: sugar, fibres, cocoa powder, milk powder, emulsifier and one or more flavours. The non-fat solids provide structure, flavour and colour to the coating.

In the present context the fat phase includes the fat in cocoa powder or paste, and milk powders. The fat in these components are calculated into the amounts of fat in the composition. The fatty acid profile and triglyceride compositions are based on the fat or fat blends only.

In a preferred embodiment of the invention the coating composition comprises 18 to 60 wt.% of sugar, preferably 25-50%, 0 to 25 wt. % cocoa powder, preferably 0-15% and 0 to 30 wt. % of dairy ingredients, preferably 0 to 12 wt. % dairy ingredients. Examples of dairy ingredients are whole milk powder, skimmed milk powder, and whey powder.

For chocolate flavoured coating the amounts of low/non-fat cocoa solids in the coating composition is below 30 wt. %, preferably from 0 to 15 wt. %, more preferably from 10 to 20 wt. %. For milk chocolate flavoured coating it is preferred that the amount of skimmed milk powder for milk chocolate is below 20 wt. %, preferably from 0 to 12 wt. %. To obtain other coatings no cocoa powder might be included at all.

The invention also relates to a method of preparing the coating composition for frozen confection according to any of claims 1 to 10, said method comprises the steps of:
providing sugar, optional cocoa, and optional dairy ingredients and the fat or fat blend, adding at least 20% of melted fat,
mixing non-fat solids with part of the melted fat and obtaining a mixture of fat and non-fat solids,
refining the mixture of fat and non-fat solids by milling to reduce the particle, preferably to a particle size to below 40 microns,
adding remaining fat to the refined mixture and
optionally adding emulsifier to the refined or non-refined mixture.

In an alternative process of the invention the non-fat solids can be pre-milled in a separate process-step (e.g. by the use of air-classifier mills). The pre-milling step can then fully or partly replace the refining of the mixture of hard fat and non-fat solids by milling to reduce the particle.

The invention also relates to a frozen confection with at least partly coated wafer or biscuit with a composition to the invention. Preferably, the frozen confection according to the present invention may have a coating thickness from 0.5 to 2 mm. Furthermore, the frozen confection according to the present invention may be a wafer cone with ice cream.

The invention also relates to a method for producing a frozen confection, the method comprising providing a coating composition as described in this patent application and applying the method of preparation according to the invention described herein.

### Fat Analysis:

Fats were analyzed based on standard methods; triglyceride composition using High Pressure Liquid Chromatography (HPLC), IUPAC method, 2.324; and fatty acid composition using Gas Chromatography, IUPAC method 2.304.

The solid fat content was determined using pulsed NMR, using the American Oil Chemists Society, AOCS, Official Method Cd 16B-93, non-tempered. Standards from the company which had solids at 0, 29.4 and 70.1 were used to calibrate the equipment. Approximately 2g of well melted fat was placed in a 10 mm NMR tube; samples were then pre-treated prior to testing to make sure it is fully melted. The fats were not tempered, heated to 60 °C, and analyzed. Samples were held at 30 min at various temperatures (0, 10, 20, 25, 30, 35, 37 and 40°C), and the values at each temperature were read in the NMR. Samples were run in replicate, and the values were averaged.

### EXAMPLES

By way of example and not limitation, the following examples are illustrative of various embodiments of the present disclosure.

The triglyceride composition of the different fat/fat blends is given in Table 1. 5 fats were analyzed based on standard methods described above.

**Table 1. Triglyceride composition of the fats/Fat blends**

| Fat Type | fat 1 | fat 2 | fat 3 | fat 4 | Blend 5 |
|---|---|---|---|---|---|
| Used in Coatings | MB1 | MB2 | MB3 | MB4 | MB5 |
| Triglyceride | | | | | |
| LLL | 0.0 | 0.0 | 0.0 | 1.6 | 6.1 |
| OLL | 0.3 | 0.2 | 0.3 | 1.8 | 3.8 |
| PLL | 1.1 | 1.1 | 1.2 | 0.7 | 2.9 |
| OOL | 0.9 | 1.0 | 0.8 | 3.2 | 0.7 |
| POL | 5.5 | 5.9 | 5.1 | 1.1 | 4.1 |
| PPL | 9.6 | 9.5 | 9.4 | 1 | 8.0 |
| OOO | 2.5 | 2.8 | 2.3 | 30.5 | 1.7 |
| POO+SOL | 13.1 | 14.1 | 12.8 | 5.5 | 10.2 |
| PPO | 51.1 | 49.1 | 51.8 | 8.7 | 44.8 |
| PPP | 2 | 1.6 | 1.9 | 0.3 | 1.5 |
| SOO | 1.5 | 1.7 | 1.3 | 6.1 | 0.8 |
| PSO | 10.5 | 10.3 | 10.7 | 6.9 | 8.4 |
| PPS | 0.4 | 0.4 | 0.5 | 0 | 0.2 |
| SSO | 1.3 | 2.2 | 1.3 | 30.6 | 1.2 |
| LOL | 0.0 | 0.0 | 0.0 | 0 | 1.4 |
| SLL | 0.0 | 0.0 | 0.0 | 0 | 1.3 |
| OLO | 0.0 | 0.0 | 0.0 | 0 | 0.6 |
| LOO | 0.0 | 0.0 | 0.0 | 0 | 1.2 |
| SLO | 0.0 | 0.0 | 0.0 | 0 | 0.4 |
| SLS | 0.0 | 0.0 | 0.0 | 0 | 0.4 |
| Unidentified | 0.2 | 0.1 | 0.6 | 2 | 0.1 |

Fat 1 and 2 are palm fractions with slip melting points of 29-30 °C; Fat 3 is interesterified palm fraction and shea and has a slip melting point of 35 °C, Fat 4 is interesterified palm, shea and sunflower oil and has a slip melting point of 35 °C; Fat blend 5 is a mixture of palm fraction (34 °C melt point) with sunflower oil in the ratio of 82:18 w/w. All fats had ∼50+5% saturated fatty acids, SFA.

As can be seen from the Table 1, blends 1-3 are richer in PPO an have lower levels of species containing the unsaturated linoleic acids, such as LLL, OLL; blend 4 has more of the C18 species including SSO and OOO. Blend 5 has characteristics of the liquid sunflower oil, such as LOL, SLL, LOO etc. While the fats 1-3 are comparable in their triglyceride structure blends 4 and 5 are different. This is also reflected in their fatty acid composition, given in Table 2.

**Table 2. Fatty acid composition of the fats/fat blends, showing major fatty acids normalized to 100% on fatty acid basis; other fatty acids range between 1-5%**

| Major fatty acids | Palmitic | Stearic | Oleic | Linoleic |
|---|---|---|---|---|
| fat 1 | 50.0 | 6.0 | 37.0 | 7.0 |
| fat 2 | 49.0 | 6.0 | 37.0 | 8.0 |
| fat 3 | 41.0 | 8.0 | 42.0 | 9.0 |
| fat 4 | 11.7 | 27.9 | 55.1 | 5.3 |
| fat blend 5 | 42.7 | 6.9 | 33.4 | 17.0 |

Fats 1 to 3 are similar in fatty acid composition, fat 4 has higher levels of stearic acid while fat 5 has higher level of the unsaturated linoleic acids, as compared to the other fats.

Figure 1 shows the solid fat contents of the different fats tested: Fats 1 and 2 are sharp melting while fats 3,4 and 5 are more plastic. The solid fat content at 0 and 10°C is higher for fats 1-3 as compared to fats 4 and blend 5. Higher solid fats at 0 and 10°C helps with setting of the coating on the cone wall, thus giving a better barrier property.

Moisture Barrier (MB) coatings were made to the formulation as Table 3:

| | Coatings | | | | | | |
|---|---|---|---|---|---|---|---|
| Ingredient | Reference | MB1 | MB2 | MB3 | MB4 | MB5 | MB6 |
| | % | % | % | % | % | % | % |
| % Fat blend | 50.91 | 50.91 (Fat 1) | 50.91 (Fat 2) | 50.91 (Fat 3) | 50.91 (Fat 4) | 50.91 (Fat 5) | 56.08 (Fat 3) |
| %Sugar | 36.65 | 36.65 | 36.65 | 36.65 | 36.65 | 36.65 | 32.72 |
| %Cocoa powder | 11.50 | 11.50 | 11.50 | 11.50 | 11.50 | 11.50 | 10.27 |
| %Lecithin | 0.93 | 0.93 | 0.93 | 0.93 | 0.93 | 0.93 | 0.93 |
| %SFA deriving from fat blend | 38.8 | 28.1 | 27.1 | 25.1 | 21.6 | 26.3 | 25.1 |

Table 3. describes the formulations used in the manufacture of the coatings that were later sprayed on the wafer cones and tested for moisture barrier protection.
Coatings MB3 and MB6 use the same fat type (fat 3) while the fat systems used in coatings MB4 is fat 4 and MB5 is fat 5.

For Coating MB6, the %fat of the recipe was increased in order to modify the rheology of the coating.

The coating was manufactured using a ball mill system targeting a particle size of 31 microns.

As first step sugar, cocoa powder and part of the fat was added to a mixing tank at 45°C and as soon as a homogenous mix was achieved the mix was transferred to the ball mill system. After the particle size was achieved the rest of the fat together with the lecithin were added and given an extra 5 minutes mixing. The final coating was discharged and sieved.

The final coating was evaluated for rheology using a Physica viscometer at 40 °C. The shearing stress used in the measurement were between 2(1/s) and 50 (1/s). Yield stress and Plastic Viscosity are mathematized using a Casson approximation formula.

**Table 4. Rheology of the Coatings, measured at 40 °C**

| Coating | Yield Stress (Pa) | Plastic Viscosity (mPas) |
|---|---|---|
| Reference | 1.4 | 141 |
| MB1 | 1.0 | 169 |
| MB2 | 1.1 | 171 |
| MB3 | 1.0 | 170 |
| MB4 | 1.4 | 170 |
| MB5 | 0.9 | 140 |
| MB6 | 0.5 | 120 |

### Coating Spraying Application on Wafer Cones

The Low SFA Coatings were maintained at a temperature between 45-50 °C in a jacketed tank. From this tank, the coating was pumped into the spraying system. The set-up of the spraying system was maintained the same for all the coatings and within the range recommended by the spraying system manufacturer.

After the spraying system has reached stability, a visual inspection of the quality of coating was done (Table 5) and 40 coated cones were collected and immediately cooled so the coating can set. Later, the cones were analysed to determine the amount of coating that were in each section of the cone (Table 6).

Samples of coated cones were collected to evaluate the distribution of the coating. Further cones were coated and ice cream was dispensed into the coated cones. Samples of the ice cream filled coated cones were collected to be exposed to a heat shock cycle (10°C for 4 weeks). Evaluation of the moisture of the cones was made every week during the four weeks so the protection of the coating against moisture from the ice cream can be assessed (Table 7).

**Table 5. Quality of Coating Application**

| Coating | Fat system | Rim coverage | Presence of gaps/pinholes | Appearance on the wall |
|---|---|---|---|---|
| MB1 | Fat 1 | Good Coverage | No windows/ No Pinholes | Smooth coverage of the surface |
| MB2 | Fat 2 | Good coverage | No windows/ No Pinholes | Smooth coverage of the surface |
| MB3 | Fat 3 | Good coverage | No windows/ No Pinholes | Smooth coverage of the surface |
| MB4 | Fat4 - it does not work | Some gaps on the rim | 50% of cones present 1 or more windows | Corrugated surface |
| MB5 | Fat 5 - it does not work | Very thin layer, wafer cone can be seen through the coating | 25% of cones present pinholes | Thin layer on the surface. Edges can be seen through the coating |
| MB6 | Fat 3 | Thin Coverage | Presence of pinholes | Appears as a thin coating |

Table 5 gives the results of the visual inspection of the cones coated with the different coatings. Coatings MB1, MB2 and MB3 were the ones that show the best coverage. Coating MB6, although it has the same fat system as coating MB3, looks thinner on the walls and pinholes were present.

**Table 6. Coating Distribution**

| Coating | Spra ying temp eratu re | Fat system | Coating Distribution | | | | Water Test |
|---|---|---|---|---|---|---|---|
| | | | Total coating (g) | Over-spray (g) | Wall (g) | Tip (g) | g water uptake |
| High SFA Cone Coating - Referenc e | 43 | High SFA - Reference | 5.4 | 0.5 | 3.7 | 1.2 | 0.23 |
| MB1 | 43 | Fat 1 | 5.4 | 0.5 | 3.5 | 1.4 | 0.12 |
| MB2 | 43 | Fat 2 | 5.4 | 0.5 | 3.7 | 1.2 | 0.13 |
| MB3 | 43 | Fat 3 | 5.3 | 0.5 | 3.5 | 1.3 | 0.13 |
| MB4 | 43 | Fat 4 | 5.5 | 0.6 | 3.7 | 1.2 | 0.3 |
| MB5 | 43 | Fat 5 | 5.2 | 0.5 | 3.4 | 1.3 | 0.3 |
| MB6 | 43 | Fat 3 | 5.5 | 0.6 | 2.9 | 2.0 | 0.9 |

Table 6. shows the results of the coating distribution in the different section of the cone for all the coatings.

Coatings MB1, MB2 and MB3 show a very similar coating distribution among themselves and also similar coating distribution as the reference coating.

Although coatings MB3 and MB6 are made with the same fat, an important difference is appreciated. Coating MB6 with a rheology outside the range of this range according to the invention has an amount of coating in the wall lower than Coating MB3 (Coating MB6: 2.9 g vs Coating MB3: 3.5g). The coating travel fast to the bottom of the cone and a bigger tip is formed in the cones using the Coating MB6. When a water test has been carried out the wafer covered with the coating MB6 has almost 7 times more water pickup than coating MB3 which has a right rheology.

Coatings MB4 and MB5 performed differently. Coating MB4 produced cones with windows or gaps on the wafer cones, while coating MB5 had a thinner appearance on the wall of the cone regardless of a similar amount of coating in the wall, it is possible that some of the liquid oil is absorbed into the wafer.

**Table 7. Moisture increase in the wafer cones during 4 weeks of heat shock treatment (-10°C)**

| | % increase in moisture in the wafer cone | | | | Sensory comments @ 4 weeks |
|---|---|---|---|---|---|
| Coatings | 1 week | 2 weeks | 3 weeks | 4 weeks | |
| High SFA Cone Coating/Reference | 0.60% | 1.04% | 1.57% | 2.03% | Soggy |
| MB1 | 0.25 | 0.31 | 0.58 | 0.77 | Crispy |
| MB2 | 0.20% | 0.43% | 0.84% | 1.02% | Crispy |
| MB3 | 0.26% | 0.70% | 1.03% | 1.10% | Crispy |
| MB4 | 0.22% | 0.47% | 1.22% | 1.90% | Soggy |
| MB5 | 0.09% | 0.56% | 1.12% | 1.81% | Soggy |
| MB6 | 0.66% | 1.19% | 1.9% | 5.11% | Very soggy |

Table 7. shows the results of the increase of wafer moisture during the 4 weeks of heat shock of the ice cream filled coated wafer cones. For Coating MB3 and MB6, although they use the same fat type the rate of increase of moisture and thereby the protection is different.

Coating MB3 shows good protection and after 4 weeks of heat shock the wafer cones are still crispy. This is not the case for coating MB6, coating MB6 had a very rapid increase in moisture and a detectable soggyness was already present at week 3 of the study.

This difference between the two coatings is mainly explained by the rheology of the coating. The Yield stress of coating MB6 is too low which makes the coating to travel faster at the bottom of the cone having less coating in the wall of the cone and a very thin layer on the inside of the cone.

Coating MB1, MB2, and MB3 gave a better protection than coatings MB4 and MB5. All these coatings have a similar rheology and the coating distribution of the coating on the cone is very similar.

It has been found that the reason why MB4 and MB5, fat 4 and fat blend 5 don't work is that Fat 4 has higher triglyceride compositions that are lower in palmitic and higher in stearic while Fat 5 is higher in unsaturated fatty acids; their solid fat content at 0 and 10°C is lower than 70 and 60 respectively. This does not allow them to set on the cone walls as well as the other fats and thereby makes it a poor barrier.

## Claims

1. A barrier coating composition for coating frozen confection, comprising, expressed in weight % based on the total weight of the coating,
40-60 wt.% of a fat or fat blend, preferably 45-55wt.%, said fat or fat blend comprising the following fatty acids composition in the triglycerides of the fat or fat blend, the % being based on total fat:
45 <= C16:0 <= 55 wt. % (palmitic acid)
4 <= C18:0 <= 10 wt. % (stearic acid)
30 <= C18:1 <= 39 wt. % (oleic acid)
3 <= C18:2 <= 7 wt. % (linoleic acid)
and said fat blend comprising a solid fat profile comprising:
75% <= N 0 <= 95%;
60% <= N 10 <= 90%;
30% <= N 20 <= 60%;
18% <= N 25 <= 35%;
0% <= N 30 <= 12%; and
0% <= N 35 <= 5%, and
said barrier coating having a Casson yield stress of 0.90 to 1.65 Pa measured at 40 °C, and wherein the fat or fat blend comprises the following triglyceride composition:
0-1 wt. % LLL
0-1 wt. % OLL
0-2 wt. % PLL
0-2 wt. % OOL
0-7 wt.% POL
0-15 wt.% PPL
0-4 wt. % OOO
8-17 wt. % POO+SOL
45 - 58 wt. % PPO
0-4 wt. % PPP
0-4 wt. % SOO
0-15 wt. % PSO
0-2 wt. % PPS, and
wherein the saturated fats in the fat or fat blend are 45-55 wt. %

2. A coating composition according to claim 1, wherein the triglyceride composition comprises 10 to 15 wt. % POO+SOL and 48 to 55 wt. %. PPO.

3. A coating composition according to any of the preceding claims, comprising
18 to 60 wt.% of sugar, preferably 25 to 50%
0 to 25 wt. % cocoa powder, preferably 0 to 15% and
0 to 30 wt. % of dairy ingredients, preferably 0 to 12 wt. % dairy ingredients.

4. A coating composition according to any of the preceding claims, wherein the Casson plastic viscosity of the coating composition is 100 to 250 mPas measured at 40 °C.

5. A coating composition according to any of the preceding claims, wherein the coating composition has a melting point of 29 to 34°C.

6. A coating composition according to any of the preceding claims, wherein said fat or fat blend does not contain hydrogenated fat and has less than <1% trans fatty acids.

7. A coating composition according to any of the preceding claims, wherein the saturated fats in the fat or fat blend are 46-54 wt. % of the fats blend in the coating composition.

8. A coating composition according to any of the preceding claims, comprising palm fraction or fractions with an iodine value of 40 to 55, preferably 42 to 52.

9. A coating composition according to any of the preceding claims, wherein the fat is selected from the group consisting of palm, shea or fats used to make cocoa butter equivalents or cocoa butter and combinations thereof.

10. A coating composition according to any of the preceding claims, wherein the fat or fat blend in the composition consists of palm fraction or fractions.

11. Use of a fat or fat blend in barrier coating for frozen confection, said fat or fat blend comprising the following fatty acids composition in the triglycerides of the fat or fat blend, the % being based on total fat:
45 <= C16:0 <= 55 wt. % (palmitic acid)
4 <= C18:0 <= 10 wt. % (stearic acid)
30 <= C18:1 <= 39 wt. % (oleic acid)
3 <= C18:2 <= 7 wt. % (linoleic acid)
and said fat blend comprising a solid fat profile comprising:
75% <= N 0 <= 95%;
60% <= N 10 <= 90%;
30% <= N 20 <= 60%;
18% <= N 25 <= 35%;
0% <= N 30 <= 12%; and
0% <= N 35 <= 5%, and
wherein said barrier coating is formulated to have a Casson yield stress of 0.90 to 1.65 Pa measured at 40 °C, and wherein the fat blend comprises the following triglyceride composition:
0-1 wt. % LLL
0-1 wt. % OLL
0-2 wt. % PLL
0-2 wt. % OOL
0-7 wt.% POL
0-15 wt.% PPL
0-4 wt. % OOO
8-17 wt. % POO+SOL, preferably 10-15 wt. % POO+SOL
45 - 58 wt. % PPO, preferably 48-55 wt. % PPO
0-4 wt. % PPP
0-4 wt. % SOO
0-15 wt.% PSO
0-2 wt. % PPS and
0-3 wt. % SSO, and wherein the coating composition comprises
18 to 60 wt.% of sugar, preferably 25-50%
0 to 25 wt. % cocoa powder, preferably 0-15% and
0 to 30 wt. % of dairy ingredients, preferably 0 to 12 wt. % dairy ingredients,
and wherein the saturated fats in the fat or fat blend are 45-55 wt. %.

12. A method of preparing the coating composition for frozen confection of any of claims 1 to 10 said method comprises the steps of:
providing sugar, optional cocoa, and optional dairy ingredients and the fat or fat blend,
adding at least 20% of melted fat,
mixing non-fat solids with part of the melted fat and obtaining a mixture of fat and non-fat solids,
refining the mixture of fat and non-fat solids by milling to reduce the particle, preferably to a particle size to below 40 microns,
adding remaining fat to the refined mixture and
optionally adding emulsifier to the refined or non-refined mixture.

13. A wafer at least partly coated with a composition according to any of claims 1 to 10.

## Patentansprüche

1. Barriereüberzugszusammensetzung zum Überziehen von gefrorenen Süßwaren, umfassend, ausgedrückt in Gew.-%, bezogen auf das Gesamtgewicht des Überzugs,
zu 40-60 Gew.-% ein Fett oder eine Fettmischung, vorzugsweise zu 45 bis 55 Gew.-%, wobei das Fett oder die Fettmischung die folgende Fettsäuren-Zusammensetzung in den Triglyceriden des Fetts oder der Fettmischung umfasst, wobei die % auf das Gesamtfett bezogen sind:
45 <= C16:0 <= 55 Gew.-% (Palmitinsäure)
4 <= C18:0 <= 10 Gew.-% (Stearinsäure)
30 <= C18:1 <= 39 Gew.-% (Ölsäure)
3 <= C18:2 <= 7 Gew.-% (Linolsäure)
und wobei die Fettmischung ein Festfettprofil umfasst, umfassend:
75 % <= N 0 <= 95 %;
60 % <= N 10 <= 90 %;
30 % <= N 20 <= 60 %;
18 % <= N 25 <= 35 %;
0% <= N 30 <= 12 %; und
0 % <= N 35 <= 5 %, und
wobei der Barriereüberzug eine Casson-Streckspannung von 0,90 bis 1,65 Pa, gemessen bei 40 °C, aufweist, und
wobei das Fett oder die Fettmischung die folgende Triglyceridzusammensetzung umfasst:
0-1 Gew.-% LLL
0-1 Gew.-% OLL
0-2 Gew.-% PLL
0-2 Gew.-% OOL
0-7 Gew.-% POL
0-15 Gew.-% PPL
0-4 Gew.-% OOO
8-17 Gew.-% POO+SOL
45-58 Gew.-% PPO
0-4 Gew.-% PPP
0-4 Gew.-% SOO
0-15 Gew.-% PSO
0-2 Gew.-% PPS und
wobei die gesättigten Fette in dem Fett oder der Fettmischung 45-55 Gew.-% ausmachen.

2. Überzugszusammensetzung nach Anspruch 1, wobei die Triglyceridzusammensetzung umfasst: zu 10 bis 15 Gew.-% POO+SOL und zu 48 bis 55 Gew.-% PPO.

3. Überzugszusammensetzung nach einem der vorhergehenden Ansprüche, umfassend
zu 18 bis 60 Gew.-% Zucker, vorzugsweise zu 25 bis 50 %
zu 0 bis 25 Gew.-% Kakaopulver, vorzugsweise zu 0 bis 15 %, und
zu 0 bis 30 Gew.-% Milchbestandteile, vorzugsweise zu 0 bis 12 Gew.- % Milchbestandteile.

4. Überzugszusammensetzung nach einem der vorhergehenden Ansprüche, wobei die plastische Casson-Viskosität der Überzugszusammensetzung 100 bis 250 mPas beträgt, gemessen bei 40 °C.

5. Überzugszusammensetzung nach einem der vorhergehenden Ansprüche, wobei die Überzugszusammensetzung einen Schmelzpunkt von 29 bis 34 °C aufweist.

6. Überzugszusammensetzung nach einem der vorhergehenden Ansprüche, wobei das Fett oder die Fettmischung kein hydriertes Fett enthält und weniger als <1 % trans-Fettsäuren aufweist.

7. Überzugszusammensetzung nach einem der vorhergehenden Ansprüche, wobei die gesättigten Fette in dem Fett oder der Fettmischung 46-54 Gew.-% der Fettmischung in der Überzugszusammensetzung ausmachen.

8. Überzugszusammensetzung nach einem der vorhergehenden Ansprüche, umfassend eine Palmfraktion oder -fraktionen mit einem Jodwert von 40 bis 55, vorzugsweise 42 bis 52.

9. Überzugszusammensetzung nach einem der vorhergehenden Ansprüche, wobei das Fett ausgewählt ist aus der Gruppe bestehend aus Palm-, Shea- oder Fetten, die zur Herstellung von Kakaobutteräquivalenten oder Kakaobutter und Kombinationen davon verwendet werden.

10. Überzugszusammensetzung nach einem der vorhergehenden Ansprüche, wobei das Fett oder die Fettmischung in der Zusammensetzung aus einer Palmfraktion oder -fraktionen besteht.

11. Verwendung eines Fetts oder einer Fettmischung in einem Barriereüberzug zum Tauchen, Umhüllen oder Verzieren von gefrorenen Süßwaren, wobei das Fett oder die Fettmischung die folgende Fettsäuren-Zusammensetzung in den Triglyceriden des Fetts oder der Fettmischung umfasst, wobei die Gew.-% auf dem Gesamtfett basieren: |
45 <= C16:0 <= 55 Gew.-% (Palmitinsäure)
4 <= C18:0 <= 10 Gew.-% (Stearinsäure)
30 <= C18:1 <= 39 Gew.-% (Ölsäure)
3 <= C18:2 <= 7 Gew.-% (Linolsäure)
und wobei die Fettmischung ein Festfettprofil umfasst, umfassend:
75 % <= N 0 <= 95 %;
60 % <= N 10 <= 90 %;
30 % <= N 20 <= 60 %;
18 % <= N 25 <= 35 %;
0 % <= N 30 <= 12 %; und
0 % <= N 35 <= 5 %, und
wobei der Barrierenüberzug so formuliert ist, dass er eine Casson-Streckspannung von 0,90 bis 1,65 Pa, gemessen bei 40 °C, aufweist, und
wobei die Fettmischung die folgende Triglyceridzusammensetzung umfasst:
0-1 Gew.-% LLL
0-1 Gew.-% OLL
0-2 Gew.-% PLL
0-2 Gew.-% OOL
0 bis 7 Gew.-% POL
0 bis 15 Gew.-% PPL
0-4 Gew.-% OOO
8-17 Gew.-% POO + SOL, vorzugsweise 10-15 Gew.% POO+SOL
45-58 Gew.-% PPO, vorzugsweise 48-55 Gew.-% PPO
0-4 Gew.-% PPP
0-4 Gew.-% SOO
0-15 Gew.-% PSO
0-2 Gew.-% PPS und
0-3 Gew.-% SSO, und wobei die Überzugszusammensetzung umfasst:
18 bis 60 Gew.-% Zucker, vorzugsweise 25 bis 50 %
0 bis 25 Gew.-% Kakaopulver, vorzugsweise 0-15 %, und
0 bis 30 Gew.-% Milchbestandteile, vorzugsweise 0 bis 12 Gew.--%
Milchbestandteile, und wobei die gesättigten Fette in dem Fett oder der Fettmischung 45-55 Gew.-% ausmachen.

12. Verfahren zum Herstellen der Überzugszusammensetzung für gefrorene Süßwaren nach einem der Ansprüche 1 bis 10, wobei das Verfahren die folgenden Schritte umfasst:
Bereitstellen von Zucker, optionalem Kakao und optionalen Milchbestandteilen und dem Fett oder der Fettmischung,
Zugeben von mindestens 20 % geschmolzenem Fett,
Mischen von Nicht-Fett-Feststoffen mit einem Teil des geschmolzenen Fetts und Erhalten einer Mischung von Fett und Nicht-Fett-Feststoffen,
Verfeinern der Mischung aus Fett und Nicht-Fett-Feststoffen durch Mahlen, um die Teilchen zu verkleinern, vorzugsweise auf eine Teilchengröße unter 40 Mikrometer,
Zugeben von verbleibendem Fett zu der verfeinerten Mischung und
gegebenenfalls Zugeben von Emulgator zu der verfeinerten oder nichtverfeinerten Mischung.

13. Waffel, die zumindest teilweise mit einer Zusammensetzung nach einem der Ansprüche 1 bis 10 überzogen ist.

## Revendications

1. Composition d'enrobage protecteur pour enrober une confiserie congelée, comprenant, exprimé en % en poids sur la base du poids total de l'enrobage,
40 à 60 % en poids d'une matière grasse ou d'un mélange de matières grasses, de préférence 45 à 55 % en poids, ladite matière grasse ou ledit mélange de matières grasses comprenant la composition en acides gras suivante dans les triglycérides de la matière grasse ou du mélange de matières grasses, le % étant sur la base de la matière grasse totale :
45 <= C16:0 <= 55 % en poids (acide palmitique)
4 <= C18:0 <= 10 % en poids (acide stéarique)
30 <= C18:1 <= 39 % en poids (acide oléique)
3 <= C18:2 <= 7 % en poids (acide linoléique)
et ledit mélange de matières grasses comprenant un profil de matière grasse solide comprenant :
75 % <=N 0 <= 95 % ;
60 % <=N 10 <= 90 % ;
30 % <=N 20 <= 60 % ;
18 % <=N 25 <= 35 % ;
0 % <=N 30 <= 12 % ; et
0 % <= N 35 <= 5 %, et
ledit enrobage protecteur ayant une limite d'élasticité de Casson de 0,90 à 1,65 Pa mesurée à 40 °C, et
dans laquelle la matière grasse ou le mélange de matières grasses comprend la composition en triglycérides suivante :
0 à 1 % en poids de LLL
0 à 1 % en poids de OLL
0 à 2 % en poids de PLL
0 à 2 % en poids de OOL
0 à 7 % en poids de POL
0 à 15 % en poids de PPL
0 à 4 % en poids de OOO
8 à 17 % en poids de POO+SOL
45 à 58 % en poids de PPO
0 à 4 % en poids de PPP
0 à 4 % en poids de SOO
0 à 15 % en poids de PSO
0 à 2 % en poids de PPS, et
dans laquelle les matières grasses saturées dans la matière grasse ou le mélange de matières grasses vont de 45 à 55 % en poids

2. Composition d'enrobage selon la revendication 1, dans laquelle la composition en triglycérides comprend 10 à 15 % en poids de POO+SOL et 48 à 55 % en poids de PPO.

3. Composition d'enrobage selon l'une quelconque des revendications précédentes, comprenant
18 à 60 % en poids de sucre, de préférence 25 à 50 %
0 à 25 % en poids de poudre de cacao, de préférence 0 à 15 % et
0 à 30 % en poids d'ingrédients laitiers, de préférence 0 à 12 % en poids d'ingrédients laitiers.

4. Composition d'enrobage selon l'une quelconque des revendications précédentes, dans laquelle la viscosité plastique de Casson de la composition d'enrobage va de 100 à 250 mPa.s mesurée à 40 °C.

5. Composition d'enrobage selon l'une quelconque des revendications précédentes, dans laquelle la composition d'enrobage a un point de fusion de 29 à 34 °C.

6. Composition d'enrobage selon l'une quelconque des revendications précédentes, dans laquelle ladite matière grasse ou ledit mélange de matières grasses ne contient pas de matière grasse hydrogénée et ont moins de <1 % d'acides gras trans.

7. Composition d'enrobage selon l'une quelconque des revendications précédentes, dans laquelle les matières grasses saturées dans la matière grasse ou le mélange de matières grasses représentent 46 à 54 % en poids du mélange de matières grasses dans la composition d'enrobage.

8. Composition d'enrobage selon l'une quelconque des revendications précédentes, comprenant une fraction ou des fractions de palme avec un indice d'iode de 40 à 55, de préférence 42 à 52.

9. Composition d'enrobage selon l'une quelconque des revendications précédentes, dans laquelle la matière grasse est choisie dans le groupe constitué de palme, karité ou de matières grasses utilisées pour fabriquer des équivalents de beurre de cacao ou du beurre de cacao et des combinaisons de ceux-ci.

10. Composition d'enrobage selon l'une quelconque des revendications précédentes, dans laquelle la matière grasse ou le mélange de matières grasses dans la composition est constitué d'une fraction ou de fractions de palme.

11. Utilisation d'une matière grasse ou d'un mélange de matières grasses dans un enrobage protecteur pour confiserie congelée, ladite matière grasse ou ledit mélange de matières grasses comprenant la composition en acides gras suivante dans les triglycérides de la matière grasse ou du mélange de matières grasses, le % étant sur la base de la matière grasse totale :
45 <= C16:0 <= 55 % en poids (acide palmitique)
4 <= C18:0 <= 10 % en poids (acide stéarique)
30 <= C18:1 <= 39 % en poids (acide oléique)
3 <= C18:2 <= 7 % en poids (acide linoléique)
et ledit mélange de matières grasses comprenant un profil de matière grasse solide comprenant :
75 % <=N 0< = 95 % ;
60 % <=N 10 <= 90 % ;
30 % <=N 20 <= 60 % ;
18 % <=N 25 <= 35 % ;
0 % <=N 30 <= 12 % ; et
0 % <= N 35 <= 5 %, et
dans laquelle ledit enrobage protecteur est formulé pour avoir une limite d'élasticité de Casson de 0,90 à 1,65 Pa mesurée à 40 °C, et
dans laquelle le mélange de matières grasses comprend la composition en triglycérides suivante :
0 à 1 % en poids de LLL
0 à 1 % en poids de OLL
0 à 2 % en poids de PLL
0 à 2 % en poids de OOL
0 à 7 % en poids de POL
0 à 15 % en poids de PPL
0 à 4 % en poids de OOO
8 à 17 % en poids de POO+SOL, de préférence 10 à 15 % en poids de POO+SOL
45 à 58 % en poids de PPO, de préférence 48 à 55 % en poids de PPO
0 à 4 % en poids de PPP
0 à 4 % en poids de SOO
0 à 15 % en poids de PSO
0 à 2 % en poids de PPS et
0 à 3 % en poids de SSO, et dans laquelle la composition d'enrobage comprend
18 à 60 % en poids de sucre, de préférence 25 à 50 %
0 à 25 % en poids de poudre de cacao, de préférence 0 à 15 % et
0 à 30 % en poids d'ingrédients laitiers, de préférence 0 à 12 % en poids d'ingrédients laitiers, et dans laquelle les matières grasses saturées dans la matière grasse ou le mélange de matières grasses représentent 45 à 55 % en poids.

12. Procédé de préparation de la composition d'enrobage pour confiserie congelée selon l'une quelconque des revendications 1 à 10 ledit procédé comprend les étapes consistant à :
fournir du sucre, du cacao facultatif, et des ingrédients laitiers facultatifs et la matière grasse ou le mélange de matières grasses,
ajouter au moins 20 % de matière grasse fondue,
mélanger les matières solides sans matière grasse à une partie de la matière grasse fondue et obtenir un mélange de matière grasse et de matières solides sans matière grasse,
raffiner le mélange de matières solides de matière grasse et sans matière grasse par mouture pour réduire la particule, de préférence à une taille de particules inférieure à 40 micromètres,
ajouter la matière grasse restante au mélange raffiné et
facultativement ajouter un émulsifiant au mélange raffiné ou non raffiné.

13. Gaufrette au moins partiellement enrobée avec une composition selon l'une quelconque des revendications 1 à 10.
